# EUROPEAN PATENT SPECIFICATION

(11) **EP 3 308 986 B1**
(45) Date of publication and mention of the grant of the patent: **28.08.2019**
(21) Application number: 17195953.9
(22) Date of filing: 11.10.2017
(51) Int. Cl.: B60C 23/12, B60C 23/00

(54) **PUMP ASSEMBLY FOR USE WITH A PNEUMATIC TIRE AND AIR MAINTENANCE TIRE SYSTEM**
PUMPENANORDNUNG ZUR VERWENDUNG MIT EINEM LUFTREIFEN UND LUFTWARTUNGSREIFENSYSTEM
ENSEMBLE DE POMPE DESTINÉ À ÊTRE UTILISÉ AVEC UN PNEUMATIQUE ET SYSTÈME PNEUMATIQUE DE MAINTENANCE D'AIR

(30) Priority: 14.10.2016 US 201662408160 P
(43) Date of publication of application: 18.04.2018
(73) Proprietor: The Goodyear Tire & Rubber Company, Akron, OH 44316 (US)
(72) Inventor: LIN, Cheng-Hsiung, Hudson, OH Ohio 44236 (US); GAU, Jin-Shy Steve, Hudson, Ohio 44236 (US)
(74) Representative: Kutsch, Bernd

(56) References cited:
- EP-A1- 3 012 125
- JP-A- H11 139 118
- JP-A- 2004 136 797
- US-A- 2 317 636

## Description

### Field of the Invention

The present invention generally relates to a tire inflator device for tires, and more specifically, to a wheel mounted tire inflator device capable of automatically pumping one or more tires on a vehicle.

### Background of the Invention

Low tire pressure is a major cause of excessive fuel consumption, tire wear, and impaired steerability. A typical pneumatic tire will leak about 25 percent of its pressure per year due to rubber's inherent permeability. It is thus good practice to check/maintain tire pressure on a regular basis.

However, even checking tire pressure every few weeks may not prevent these adverse affects when a slow leak is present, and the leak may go undetected unless a careful record is maintained of how frequently the pressure in each tire has to be replenished. A fast leak or flat condition may rapidly cause damage to the tire and even render it unusable in a short period of time even though this condition may go unnoticed by an inexperienced driver until it is too late.

It is thus desirable to have a mechanism that monitors the tire system pressure and automatically replenishes the tire pressure when it is lower than its optimal amount.

JP-A-H11-139118 describes a pumping assembly in accordance with the preamble of claim 1. A similar pumping assembly is also described in US-A-2,317,636.

EP-A-3 012 125 describes an air maintenance tire assembly mounted to a tire rim. The assembly comprises an even number of pumps attached to the tire rim, a gravity mass for producing a pumping action, a cam fixed to the gravity mass, and rollers for engaging the cam and producing the pumping action as the tire rotates.

JP-A-2004-136797 describes a compact vehicular pump device comprising a pump part which is operated by relative rotation between a stationary shaft and a rotating part and takes and pressurizes ambient air. It is placed in a wheel hub part.

### Summary of the Invention

The invention relates to a pumping assembly in accordance with claim 1 and to a tire air maintenance system in accordance with claim 13.

Dependent claims refer to preferred embodiments of the invention.

A pumping assembly in accordance with a preferred aspect of the present invention maintains the pressure of a pneumatic tire during operation. The pumping assembly includes at least one pump having a first and second pump chamber, wherein an outlet of the first chamber is in fluid communication with the inlet of a second chamber. An optional check valve is preferably located between the outlet and the inlet. The pumping assembly is configured for attachment to the tire rim and rotates with the tire rim. The cam pumping assembly includes a gravity mass for retarding rotation of the cam during operation. The pump has a roller for engaging the cam and producing the pumping action as the tire rim rotates.

A pumping assembly in accordance with a preferred aspect of the present invention maintains the pressure of a pneumatic tire during operation. The pumping assembly may include a first pump having a first chamber and a second pump having a second chamber, wherein the outlet of the first pump chamber is directed into the inlet of the second pump chamber. An optional check valve is preferably located between the outlet and the inlet. The pump is configured for attachment to the tire rim. A cam is mounted on the rim and connected to a gravity mass for retarding rotational motion of the cam. The pump has a roller for engaging the cam and producing the pumping action as the tire rim rotates.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein a check valve is positioned between the first chamber and the second chamber.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein said reservoir further includes an outlet for directing pressurized air into a valve stem of the pneumatic tire.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, and further including an inlet control valve.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the inlet control valve has a diaphragm in fluid communication with the reservoir pressure.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the inlet control valve has an adjustable set pressure screw to adjust the set pressure.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the outlet of the first pump is fed into the inlet of the first chamber of the second pump, and the first chamber is fed into the second chamber of the second pump.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the cam has a continuous spiral groove.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the cam has a continuous spiral groove and wherein each pump has a roller bearing received in the spiral groove.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the reservoir is in fluid communication with a first tire cavity and a second tire cavity.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the gravity mass is integrally formed with the cam.

One or more embodiments of the present invention provide a pumping assembly for use with a pneumatic tire mounted on a tire rim to keep the pneumatic tire from becoming underinflated, the pumping assembly comprising, at least one pump mounted in a housing having a reservoir, said housing being attached to the tire rim, said pump having a first chamber and a second chamber, wherein the outlet of the first chamber is fed into the inlet of the second chamber, a cam for producing a pumping action and being connected to a gravity mass for maintaining the cam in a fixed position, and said pump having an actuating arm for engaging the cam and producing the pumping action as the tire rotates, wherein the cam is rotatably mounted in the reservoir.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the outlet of the first chamber is fed into the second chamber.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein a check valve is positioned between the first chamber and the second chamber.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein said reservoir further includes an outlet for directing pressurized air into a valve stem of the pneumatic tire.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, further including an inlet control valve that has a diaphragm in fluid communication with the reservoir pressure.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the pumping assembly pumps pressurized air in a tire cavity of the pneumatic tire in either direction of rotation of the tire rim.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the cam has a spiral groove.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein each pump has a roller bearing received in the spiral groove.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the reservoir is in fluid communication with a first tire cavity and a second tire cavity.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the gravity mass is integrally formed with the cam.

One or more embodiments of the present invention provide a pumping assembly for use with a pneumatic tire mounted on a tire rim to keep the pneumatic tire from becoming underinflated, the pumping assembly comprising a first and second pump mounted in a reservoir, said reservoir being attached to the tire rim; said first pump having a first chamber and said second pump having a second chamber, a cam for producing a pumping action and having an attached gravity mass for maintaining the cam in a fixed position, and said pump having an actuating arm for engaging the cam and producing the pumping action as the tire rotates, wherein the cam is rotatably mounted in the reservoir.

### Brief Description of the Drawings

The present invention will be described by way of example and with reference to the accompanying drawings, in which:
FIG. 1 is a dual tire assembly shown with a pumping mechanism of the present invention.
FIG. 2 is a partial cross-sectional view of the wheel assembly of Fig. 1;
FIG. 3 is a cross-sectional view of one tire of the wheel assembly of FIG. 1;
FIG. 4 is a perspective view of the pumping mechanism of the present invention;

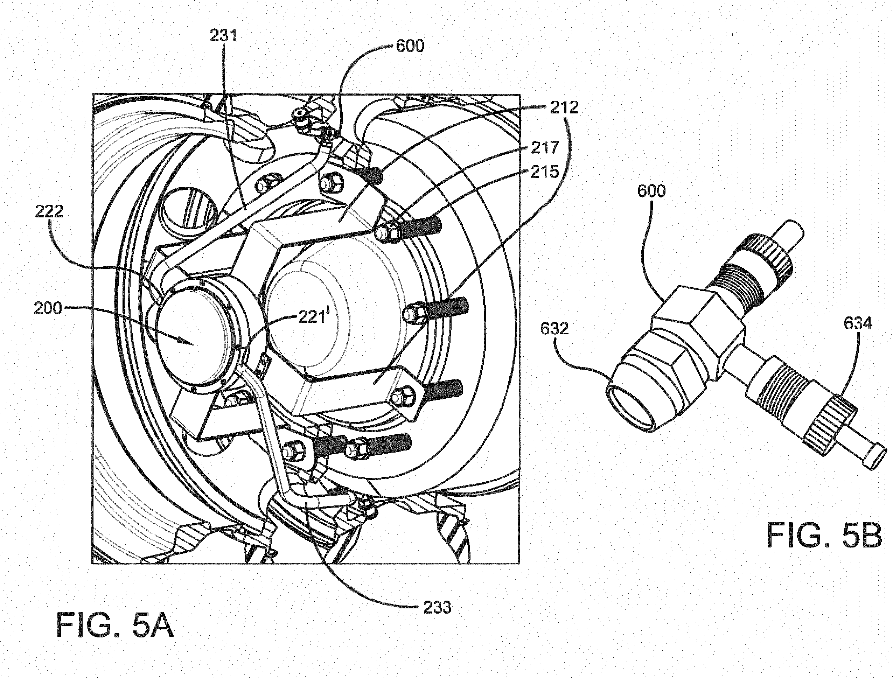

FIG. 5A is a close up view of the pumping mechanism illustrating the connections to the tire valves;
FIG. 5B is a front view of the valve stem tee;
FIG. 6 is a schematic of the pumping mechanism of the present invention;
FIG. 7 is a top view of the pump housing;
FIG. 8 is a cross-sectional view of the pump housing in the direction 8-8;
FIG. 9 is a cross-sectional view of the pump housing in the direction 9-9;
FIG. 10 is a cross-sectional view of an inlet control valve of the present invention;
FIG. 11 is a cross-sectional view of a pump of the present invention;
FIG. 12 is a schematic of the connections of the various components of the pumping mechanism of the present invention;
FIG. 13a is a cross-sectional view of the driving cam of the present invention;
FIG. 13b is a front view of the driving cam of the present invention;

### Detailed Description of Example Embodiments of the Present Invention

A pumping assembly 200 in accordance with one aspect of the invention defines a tire pressure maintenance system that is mounted on a wheel of a tire and that automatically pumps air into a tire during rotation of the wheel. The pump assembly 200 provides a low profile and effective air maintenance pump system that easily mounts externally to a standard wheel without significant modification of to the standard wheel. The assembly is small, compact and light weight. Further, the assembly introduces no issue when mounting to a conventional wheel. Although the pump assembly is shown for use with a commercial truck dual tire 1, 2 assembly, the invention is not limited to same and may be used to maintain the air pressure of a single tire. In addition, the pump assembly 200 may be used in conjunction with passenger or other types of tires.

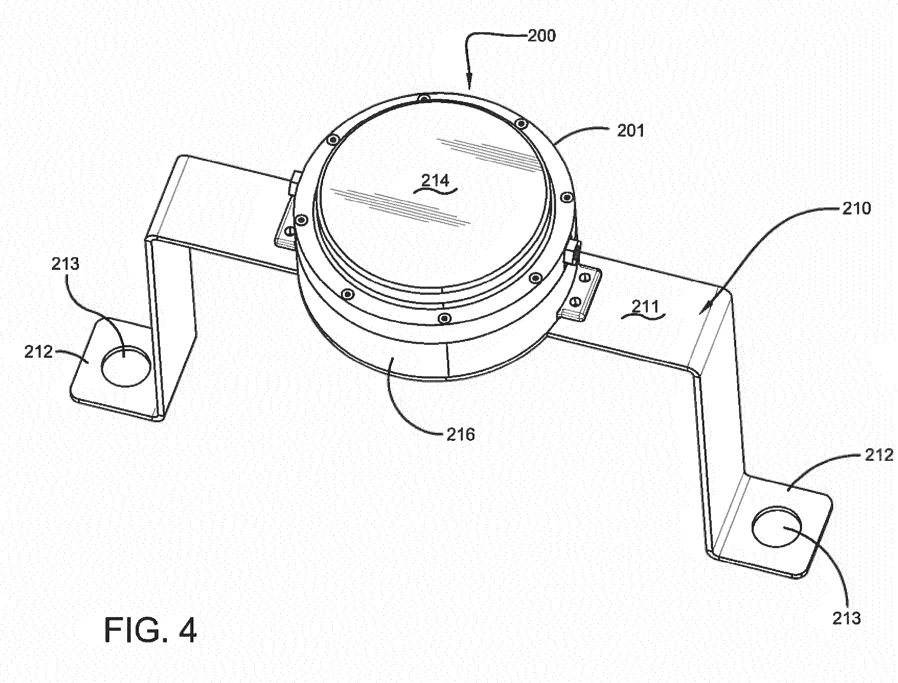

As shown in Figure 4, the pump assembly 200 includes a housing 201 that is preferably round in shape. The housing 201 has an upper half 214 and a lower half 216 that are joined together to form a reservoir 219. A seal 221 is located between the upper half 214 and the lower half 216 to ensure that the housing is leak proof. The lower half 216 of the housing has a locking member 218 that may be received into a mating locking hole of a support bracket 210 so that the housing may be secured to the support bracket in a twist and lock fashion.

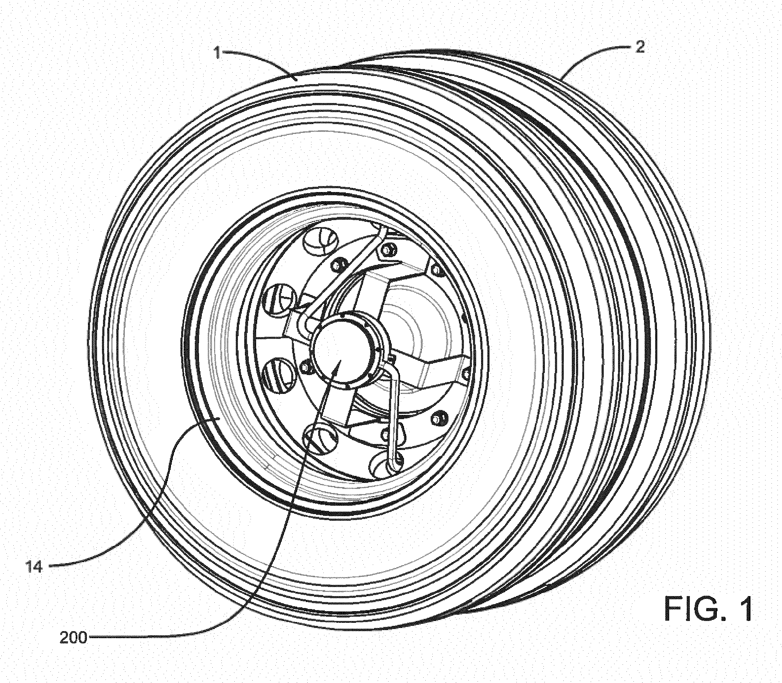

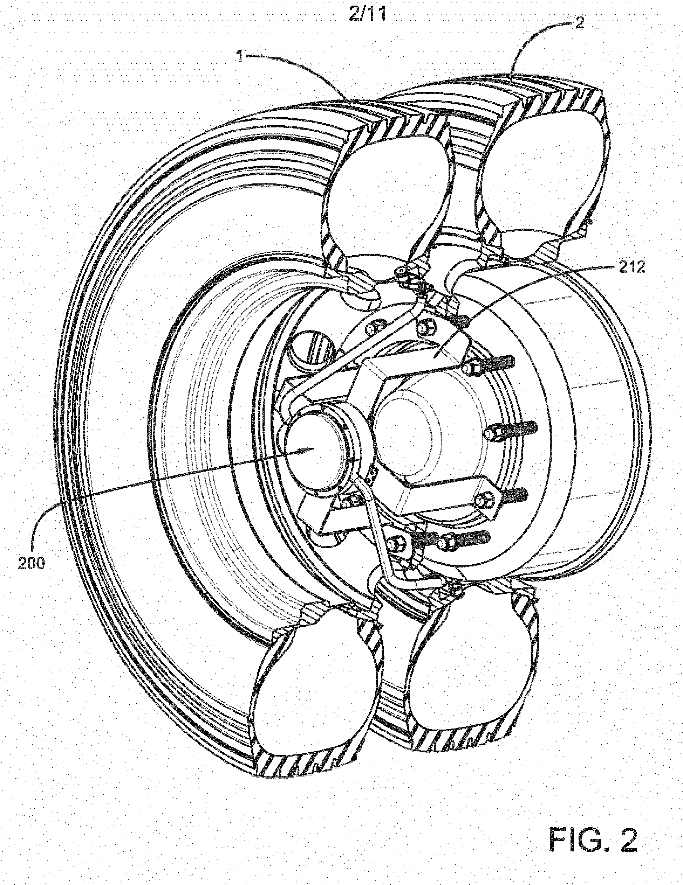

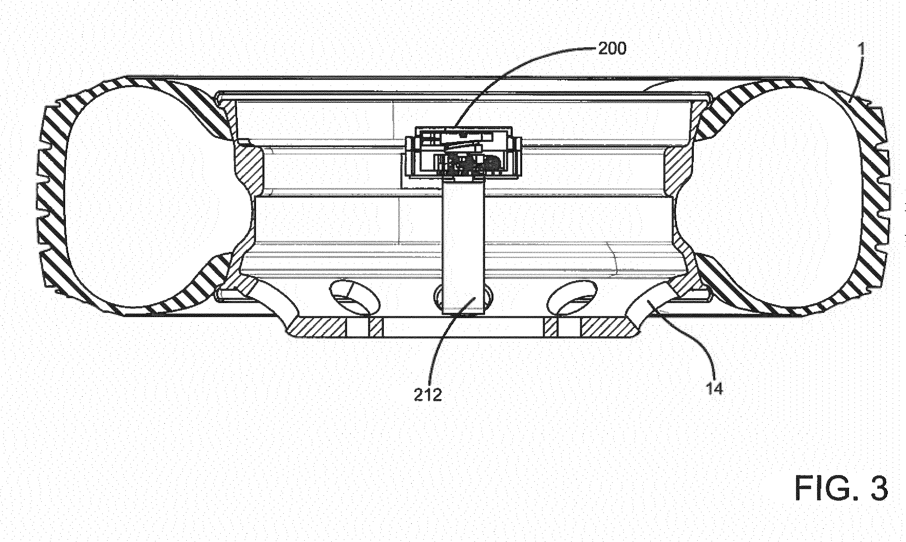

Figures 1-4 illustrates that the pump assembly 200 mounted to the support bracket 210. The support bracket 210 has a support arm 211 connected to support legs 212. The support legs 212 have holes 213 for being secured by bolts 215 and nuts 217 to the hub/outer rim surface 14 of the wheel assembly. The support bracket may have four support legs as shown in Figure 2.

### Driving Cam

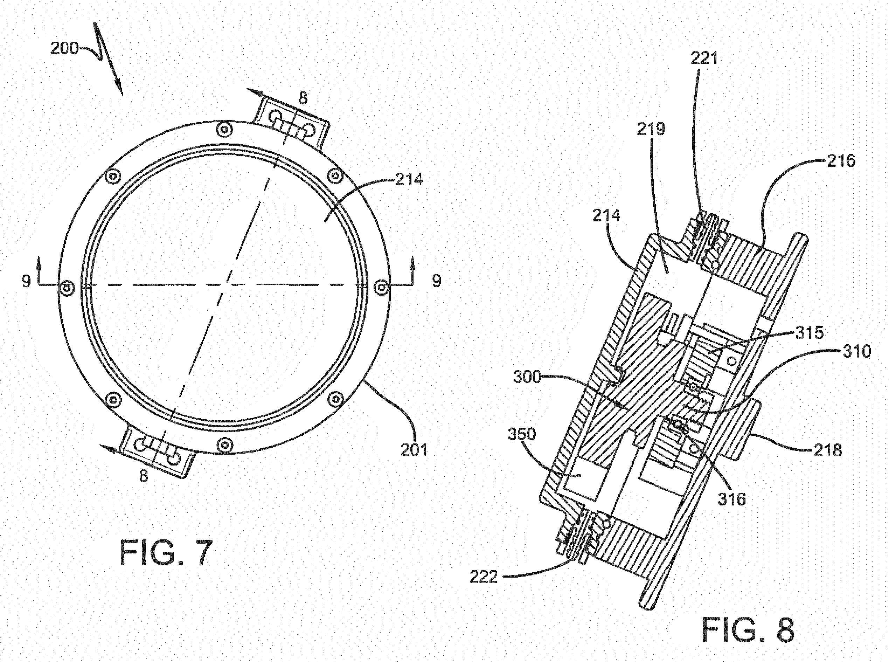

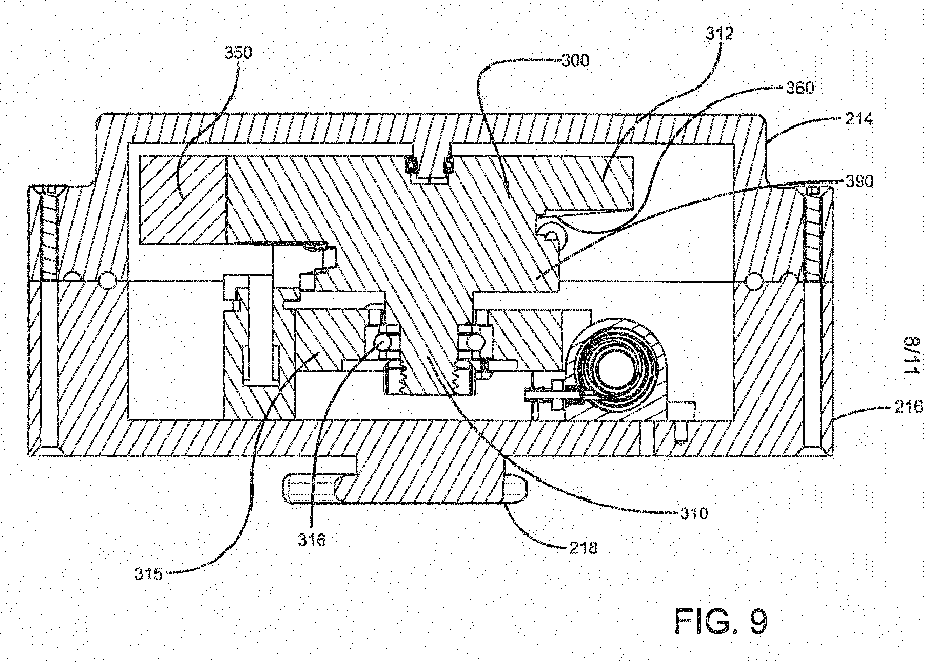

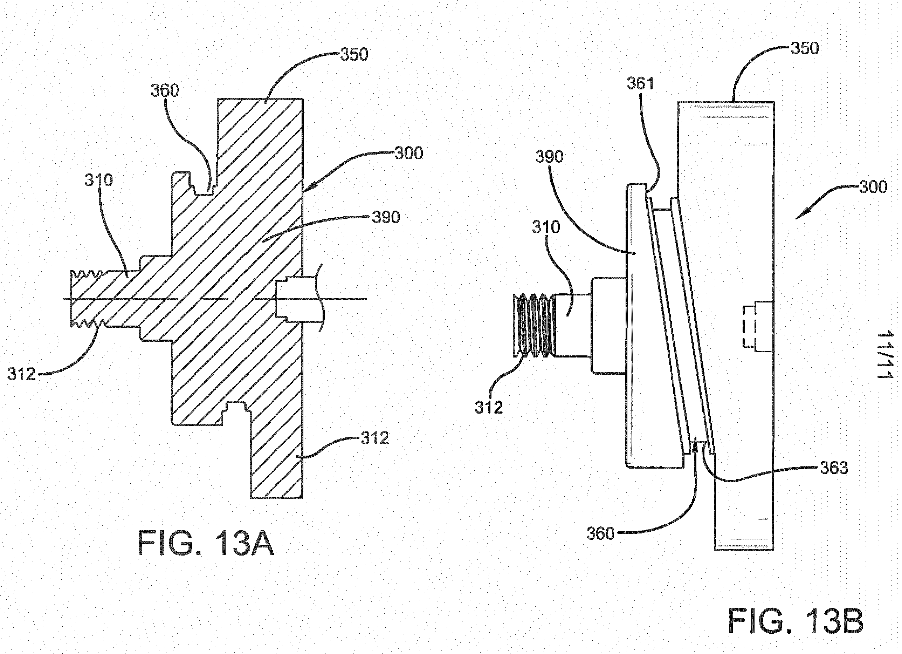

As shown in Figures 8-9, the pump assembly 200 further includes a driving cam 300. The driving cam 300 functions to drive the pumps of the assembly 100 as described, below. The driving cam 300 has an asymmetrically shaped upper portion having a light weight side 312 and a heavy side 350. The heavy side 350 has an integrally formed heavy mass or a heavy mass connected thereto. The driving cam 300 has a mounting stem 310 that is rotatably mounted to bearing housing 315. A ball bearing 316 is mounted to the stem to allow the driving cam to freely rotate relative to the housing 201 and ensure smooth and frictionless relative motion. As the housing rotates with the wheel during operation, the heavy mass 350 of the cam hangs in a vertical position. The cam mass is sized so that it is sufficiently heavy to retard motion of the cam so that the cam is rotationally fixed relative to the housing. The middle section 390 of the cam 300 has an angled groove 360 that extends about the outer circumference of the middle section of the cam 300. The angled groove 360 is a continuous groove forming a 360 degree pathway that has the same starting and ending point. At least one pump 400 has a pump actuating member 412 received in the angle groove 360. As the pump actuating member 412 moves in the groove, the pump is actuated to pump. As shown in Fig. 13B, the groove 360 is slanted at an angle, and has a low end 361 and a high end 363. The spiral groove is continuous.

### Pump

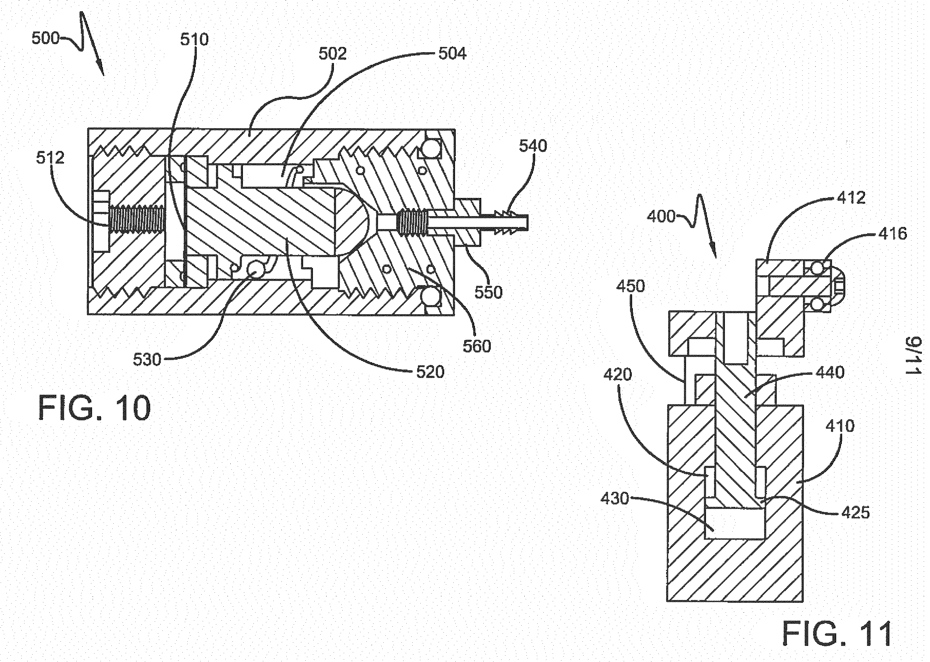

A piston pump 400 suitable for use with the invention is shown in Figure 11. The invention is not limited to a piston pump. Other types of pump designs may also be used, such as a diaphragm pump. The pump 400 has an outer housing 410 and a first interior chamber 420. Preferably the piston pump has a second interior chamber 430. A piston 440 is received in the cylindrical interior chamber. The piston has a distal circular end 425 that has a seal. The outer housing 410 further includes a cylindrical guide 450 to prevent rotation of the piston during actuation. A pump actuating member 412 is connected to the piston 440. The pump actuating member 412 has a roller bearing 416 that is received in the groove 360. The roller bearing 416 is slidably received in the angled or spiral groove 360. The roller bearing 416 ensures low friction during actuation of the pump. As the roller bearing 416 slides from the low end of the 361 to the high end 363, the pump piston is retracted from the cylinder, and the air in the first chamber is compressed. As the roller bearing 416 slides in the groove from the high end 363 to the low end, the air in the second chamber 430 is compressed. The pump action is based upon displacement control, i.e., the cam spiral groove controls the pump stroke.

If a single chamber pump is used, then two or more single chamber pumps are connected in series. The chambers are connected in series so that the outlet of the first pump is fed into the inlet of the second pump. Preferably, a check valve is located between the inlet and the outlet.

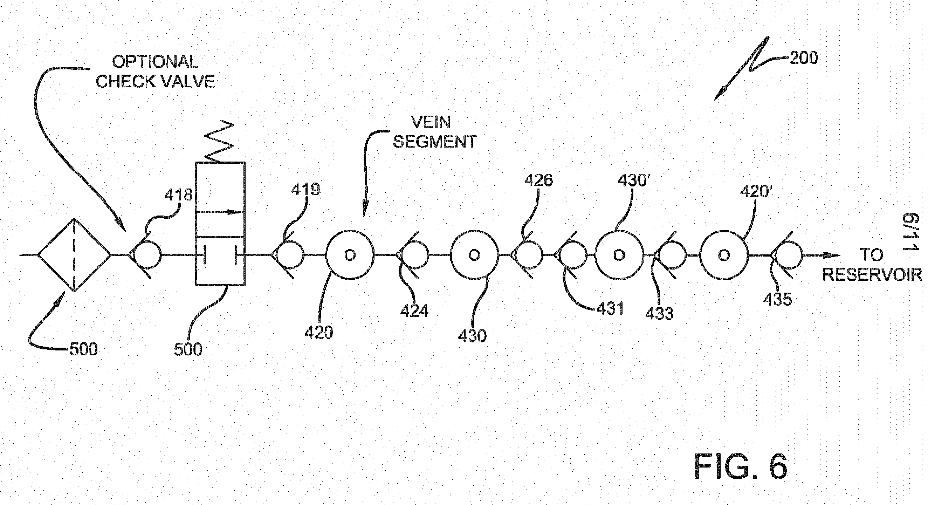

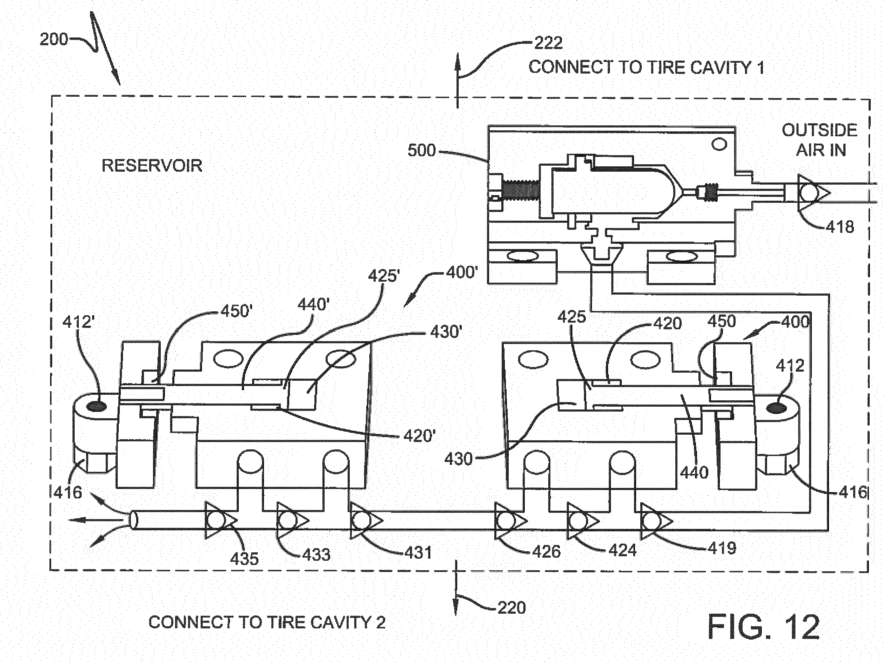

If a double chamber pump is used, then the first chamber is connected in series so that the outlet of the first chamber is fed into the inlet of the second chamber. Preferably, a check valve is located between the inlet and the outlet. Preferably, there are two double chamber pumps 400, 400' used, such as shown in Figures 6 and 12. As shown, the assembly is preferably connected to an inlet control valve 500, as described in more detail below. As shown in Figure 12, air from the inlet control valve is ported to the first pressure chamber 420 of pump 400. A check valve 419 is preferably located just upstream the inlet of the first pressure chamber 420. The second pressure chamber 430 is in fluid communication with the first pressure chamber 420. A check valve 424 is located between the chambers 420, 430. A third check valve 426 is located downstream of second pressure chamber 430. An optional fourth check valve 431 may be located immediately upstream of the low pressure chamber 430'. The exhaust from the second pressure chamber 430 is directed into chamber 430' of the second pump 400'. Exhaust from chamber 430 is fed into chamber 420'. Check valve 433 is located between the chambers 430', 420'. Check valve 435 is located downstream of outlet of chamber 420'.

### Inlet control valve

The control of the flow in the system may occur at the inlet, and an inlet control valve 500 suitable for use with the invention is shown in Figure 10. However, the invention is not limited to the use of an inlet control mechanism. Other types of flow control mechanism such as outlet or bypass may be used in this invention. The inlet control valve 500 has a housing 502 with an internal chamber 504 located therein. Positioned at a first end of the chamber is a diaphragm 510. The flexible diaphragm 510 is in fluid communication with the internal chamber 504 and an inlet pressure 512. The inlet pressure 512 is the reservoir pressure 200. A spring loaded valve member 520 is biased in the open position by a spring 530. The nose of the valve member 520 seals off inlet passageway 540. The inlet passageway 540 is in fluid communication with the outside ambient air, via a tube connected to a hole in the reservoir. A filter 550 may be positioned in front of the inlet air tube. When the reservoir pressure exceeds the desired set pressure of the inlet control valve, the spring loaded valve member closes off the inlet air flow. The control valve set pressure was pre-determined by the height a set pressure screw 560. The set pressure could be easily reset by replacing proper set pressure screw 560 only.

### System Operation

Figure 6 illustrates a schematic representation of a flow diagram of Figure 12. In this embodiment, there is an inlet control valve. The inlet control valve senses the reservoir pressure. The reservoir pressure is in fluid communication with one or more tire cavities, and thus is an indirect cavity pressure. If the reservoir pressure is below the set pressure, the inlet control valve will open and allow outside air into the system to be pumped. If the reservoir pressure is greater than the set pressure, the inlet control valve will close off air to the pump system. The system further includes two double acting piston pumps that each have two chambers: 420, 430 and 420' and 430'. As shown in Figure 6 and 12, a first pump chamber 420 is connected in series with a second pump chamber 430, separated by a check valve 424. Thus, compressed air from the first pump chamber 420 is fed into the inlet of the second pump chamber 430. The compressed air from the second pump chamber 430 is then fed into the first pump chamber 420' of the second pump. The compressed air from the first pump chamber 420' is then fed into the second pump chamber 430'. A plurality of check valves 418, 419, 424, 431, 433, and 435 are positioned between the chambers to prevent back flow. The pump outlet is in fluid communication with the reservoir. The reservoir is in fluid communication with one or more tire cavities, and the reservoir will flow air into the tire valve stem via a T shaped member 600. The T shaped member 600 is connected to a standard valve stem, and requires no modification to the valve stem to work. The reservoir has outlets 221', 222 for connecting to tubes 231, 233. Tube 231 is connected to a T shaped member 600. The first end 632 of the T shaped member is threaded to the valve stem of a first tire. A second end 634 is connected to the tube 231. The second end 634 has a low cracking valve core or check valve located therein. A third end of the T shaped member equipped with a standard valve core allows for normal valve functionality (e.g., filling the tire cavity by air pump, deflating the tire for tire service, tire pressure measurement, etc.) The T shaped member 600 is commercially available and is sold by several companies for external TPMS sensor mounting application.

The system will operate to pump air when the reservoir pressure is lower than the set pressure, and when the system is undergoing dynamic rotation. During rotation of the wheel, the cam is held in a stationary position due to the heavy mass. The pumps rotate in the spiral groove. As the pumps travel around the spiral groove, each piston extends and retracts, compressing the air in each chamber.

As described above, dual chamber pumps are used wherein each pump chamber is connected in series to another pump chamber. However, dual chamber pumps need not be used, and two or more single chamber pumps may be connected in series as described. One or more check valves are positioned there between to prevent backflow.

As described above, the assembly 200 functions bi-directionally, regardless of the direction of rotation of the wheel/tire. Further, the installation direction will have no effect on pumping performance.

While the system has been described as being mounted in a reservoir, the system would also work if it was not mounted in the reservoir. The advantage to the reservoir is that it provides an indirect means of sensing the pressure of the tire cavities, and also that it provides pressure stabilization.

While the system has been described with an inlet control valve, an outlet or bypass control valve could be used.

## Claims

1. A pumping assembly for use with a pneumatic tire (1, 2) mounted on a tire rim (14) to keep the pneumatic tire from becoming underinflated, the pumping assembly (200) comprising:
(i) at least one pump (400, 400') mounted in a housing (201) having a reservoir (219), the housing being attached to the tire rim and the pump (400, 400') having a first chamber (420) and a second chamber (430), wherein the outlet of the first chamber (420) is fed into the inlet of the second chamber (430); or
(ii) a first and second pump (400, 400') mounted in a reservoir (219), the reservoir being attached to the tire rim and the first pump (400) having a first chamber (420) and the second pump (400') having a second chamber (430); and
a cam (300) for producing a pumping action and being connected to a gravity mass (350) for maintaining the cam (300) in a fixed position;
wherein the at least one pump (400, 400') or the first and the second pump have an actuating arm (412) for engaging the cam (300) and producing the pumping action as the tire (1, 2) rotates;
**characterized in that** a check valve (424) is positioned between the first chamber (420) and the second chamber (430) and **in that** the reservoir (219) further includes an outlet for directing pressurized air into a valve stem of the pneumatic tire (1, 2), wherein the pump outlet is in fluid communication with the reservoir (219).

2. The pumping assembly as set forth in claim 1, further including an inlet control valve (500).

3. The pumping assembly of claim 2 wherein the inlet control valve (500) has a diaphragm (510) in fluid communication with the reservoir pressure.

4. The pumping assembly of claim 2 or 3 wherein the inlet control valve (500) has an adjustable set pressure screw (560) to adjust the set pressure.

5. The pumping assembly as set forth in claim 1 wherein the pumping assembly (200) has the feature of section (i) of claim 1 and further includes a second pump (400') having a first chamber (420') and a second chamber (430'), wherein the outlet of the first pump (400) is fed into the inlet of the first chamber (420') of the second pump (400'), and the first chamber (420') is fed into the second chamber (430') of the second pump (400').

6. The pumping assembly as set forth in at least one of the previous claims wherein the cam (300) has a continuous spiral groove (360).

7. The pumping assembly as set forth in claim 6 wherein each pump (400, 400') has a roller bearing (416, 316) received in the spiral groove (360).

8. The pumping assembly as set forth in at least one of the previous claims wherein the reservoir (19) is in fluid communication with a first tire cavity and a second tire cavity.

9. The pumping assembly as set forth in at least one of the previous claims wherein the gravity mass (350) is integrally formed with the cam (300).

10. The pumping assembly as set forth in at least one of the previous claims wherein the cam (300) is rotatably mounted in the reservoir (219).

11. The pumping assembly as set forth in at least one of the previous claims wherein the pumping assembly (200) has the feature of section (ii) of claim 1 and the outlet of the first chamber (420) is fed into the second chamber (430).

12. The pumping assembly as set forth in at least one of the previous claims wherein the pumping assembly (200) is configured to pump pressurized air in a tire cavity of the pneumatic tire (1, 2) in either direction of rotation of the tire rim.

13. A tire air maintenance system comprising a pneumatic tire (1, 2) mounted on a tire rim (14), preferably a dual tire assembly, and a pumping assembly (200) in accordance with at least one of the previous claims.

## Patentansprüche

1. Pumpanordnung zur Verwendung mit einem an einer Reifenfelge (14) gelagerten Luftreifen (1, 2), um zu verhindern, dass der Luftreifen zu schwach aufgepumpt ist, wobei die Pumpanordnung (200) Folgendes umfasst:
(i) wenigstens eine Pumpe (400, 400'), die in einem Gehäuse (201) gelagert ist, das ein Becken (219) aufweist, wobei das Gehäuse an der Reifenfelge befestigt ist und die Pumpe (400, 400') eine erste Kammer (420) und eine zweite Kammer (430) aufweist, wobei der Auslass der ersten Kammer (420) in den Einlass der zweiten Kammer (430) eingespeist wird; oder
(ii) eine erste und eine zweite Pumpe (400, 400'), die in einem Becken (219) gelagert sind, wobei das Becken an der Reifenfelge befestigt ist und die erste Pumpe (400) eine erste Kammer (420) und die zweite Pumpe (400') eine zweite Kammer (430) aufweist; und
einen Nocken (300) zum Bewirken einer Pumpwirkung und der mit einer Schwerkraftmasse (350) verbunden ist, um den Nocken (300) in einer fixierten Position zu halten;
wobei die wenigstens eine Pumpe (400, 400') oder die erste und die zweite Pumpe einen Betätigungsarm (412) aufweisen, um den Nocken (300) in Eingriff zu nehmen und die Pumpwirkung zu bewirken, während sich der Reifen (1,2) dreht;
**dadurch gekennzeichnet, dass** ein Klappenventil (424) zwischen der ersten Kammer (420) und der zweiten Kammer (430) positioniert ist und dadurch, dass das Becken (219) ferner einen Auslass zum Leiten von Druckluft in einen Ventilschaft des Luftreifens (1, 2) beinhaltet, wobei der Pumpenauslass mit dem Becken (219) in Fluidverbindung steht.

2. Pumpanordnung nach Anspruch 1, ferner ein Einlasssteuerventil (500) beinhaltend.

3. Pumpanordnung nach Anspruch 2, wobei das Einlasssteuerventil (500) eine Federplatte (510) aufweist, die in Fluidverbindung mit dem Beckendruck steht.

4. Pumpanordnung nach Anspruch 2 oder 3, wobei das Einlasssteuerventil (500) eine einstellbare Solldruckschraube (560) aufweist, um den Solldruck einzustellen.

5. Pumpanordnung nach Anspruch 1, wobei die Pumpanordnung (200) das Merkmal des Abschnitts (i) nach Anspruch 1 aufweist und ferner eine zweite Pumpe (400') mit einer ersten Kammer (420') und einer zweiten Kammer (430') beinhaltet, wobei der Auslass der ersten Pumpe (400) in den Einlass der ersten Kammer (420') der zweiten Pumpe (400') eingespeist wird und die erste Kammer (420') in die zweite Kammer (430') der zweiten Pumpe (400') eingespeist wird.

6. Pumpanordnung nach wenigstens einem der vorhergehenden Ansprüche, wobei der Nocken (300) eine kontinuierliche Wendelnut (360) aufweist.

7. Pumpanordnung nach Anspruch 6, wobei jede Pumpe (400, 400') ein Rollenlager aufweist (416, 316), das in der Wendelnut (360) aufgenommen wird.

8. Pumpanordnung nach wenigstens einem der vorhergehenden Ansprüche, wobei das Becken (19) mit einem ersten Reifenhohlraum und einem zweiten Reifenhohlraum in Fluidverbindung steht.

9. Pumpanordnung nach wenigstens einem der vorhergehenden Ansprüche, wobei die Schwerkraftmasse (350) einstückig mit dem Nocken (300) ausgebildet ist.

10. Pumpanordnung nach wenigstens einem der vorhergehenden Ansprüche, wobei der Nocken (300) drehbar in dem Becken (219) gelagert ist.

11. Pumpanordnung nach wenigstens einem der vorhergehenden Ansprüche, wobei die Pumpanordnung (200) das Merkmal des Abschnitts (ii) nach Anspruch 1 aufweist und der Auslass der ersten Kammer (420) in die zweite Kammer (430) eingespeist wird.

12. Pumpanordnung nach wenigstens einem der vorhergehenden Ansprüche, wobei die Pumpanordnung (200) konfiguriert ist, um Druckluft in einen Reifenhohlraum des Luftreifens (1, 2) in jede Drehrichtung der Reifenfelge zu pumpen.

13. Luftreifenwartungssystem, umfassend einen Luftreifen (1, 2), der an einer Reifenfelge (14), bevorzugt einer Zwillingsreifenanordnung, gelagert ist, und eine Pumpanordnung (200) nach wenigstens einem der vorhergehenden Ansprüche.

## Revendications

1. Assemblage de pompage pour son utilisation avec un bandage pneumatique (1, 2) monté sur une jante (14) d'un bandage pneumatique destiné à empêcher un sous-gonflage du bandage pneumatique, l'assemblage de pompage (200) comprenant :
(i) au moins une pompe (400, 400') montée dans un logement (201) possédant un réservoir (219), le logement étant fixé à la jante du bandage pneumatique et la pompe (400, 400') possédant une première chambre (420) et une seconde chambre (430) ; dans lequel la sortie de la première chambre (420) est alimentée dans l'entrée de la seconde chambre (430) ; ou
(ii) une première et une seconde pompe (400, 400') montées dans un réservoir (219), le réservoir étant fixé à la jante du bandage pneumatique et la première pompe (400) possédant une première chambre (420) et la seconde pompe (400') possédant une seconde chambre (430) ; et
une came (300) destinée à fournir une action de pompage et étant reliée à une masse de pesanteur (350) pour le maintien de la came (300) dans une position fixe ;
dans lequel ladite au moins une pompe (400, 400') ou bien la première et la seconde pompe possèdent un bras d'actionnement (412) destiné à entrer en contact avec la came (300) et produisant l'action de pompage lors de la mise en rotation du bandage pneumatique (1, 2);
**caractérisé en ce qu'**un clapet de non-retour (424) est disposée entre la première chambre (420) et la seconde chambre (430), et **en ce que** le réservoir (219) englobe en outre une sortie pour diriger de l'air mis sous pression dans une tige de soupape du bandage pneumatique (1, 2) ; dans lequel la sortie de la pompe est mise en communication par fluide avec le réservoir (219).

2. Assemblage de pompage selon la revendication 1, englobant en outre une soupape de commande d'entrée (500).

3. Assemblage de pompage selon la revendication 2, dans lequel la soupape de commande d'entrée (500) possède un diaphragme (510) mis en communication par fluide avec la pression du réservoir.

4. Assemblage de pompage selon la revendication 2 ou 3, dans lequel la soupape de commande d'entrée (500) possède une vis réglable (560) pour la pression de consigne destinée à régler la pression de consigne.

5. Assemblage de pompage selon la revendication 1, dans lequel l'assemblage de pompage (200) possède la caractéristique du paragraphe (i) de la revendication 1 et englobe en outre une seconde pompe (400') possédant une première chambre (420') et une seconde chambre (430') ; dans lequel la sortie de la première pompe (400) est alimentée dans l'entrée de la première chambre (420') de la seconde pompe (400') et la première chambre (420') est alimentée dans la seconde chambre (430') de la seconde pompe (400').

6. Assemblage de pompage selon au moins une des revendications précédentes, dans lequel la came (300) possède une rainure continue en spirale (360).

7. Assemblage de pompage selon la revendication 6, dans lequel chaque pompe (400, 400') possède un palier à rouleaux (416, 316) logé dans la rainure en spirale (360).

8. Assemblage de pompage selon au moins une des revendications précédentes, dans lequel le réservoir (19) est mis en communication par fluide avec une première cavité du bandage pneumatique et une seconde cavité du bandage pneumatique.

9. Assemblage de pompage selon au moins une des revendications précédentes, dans lequel la masse de pesanteur (350) est réalisée en une seule pièce avec la came (300).

10. Assemblage de pompage selon au moins une des revendications précédentes, dans lequel la came (300) est montée en rotation dans le réservoir (219).

11. Assemblage de pompage selon au moins une des revendications précédentes, dans lequel l'assemblage de pompage (200) possède la caractéristique du paragraphe (ii) de la revendication 1 et la sortie de la première chambre (420) est alimentée dans la seconde chambre (430).

12. Assemblage de pompage selon au moins une des revendications précédentes, dans lequel l'assemblage de pompage (200) est configuré pour pomper de l'air mis sous pression dans une cavité du bandage pneumatique (1, 2) dans l'une ou l'autre direction de rotation de la jante du bandage pneumatique.

13. Système de maintien de l'air dans un bandage pneumatique comprenant un bandage pneumatique (1, 2) monté sur une jante de bandage pneumatique (14), de préférence un assemblage du type à double bandage pneumatique, et un assemblage de pompage (200) selon au moins une des revendications précédentes.
